# EUROPEAN PATENT SPECIFICATION

(11) **EP 3 426 963 B1**
(45) Date of publication and mention of the grant of the patent: **10.08.2022**
(21) Application number: 17716102.3
(22) Date of filing: 03.03.2017
(51) Int. Cl.: F16L 43/00

(54) **ANGLE PIPE, ESPECIALLY FOR LINED FLUE GAS CONDUIT**
WINKELROHR, INSBESONDERE FÜR AUSGEKLEIDETE ABGASLEITUNG
TUYAU D'ANGLE, EN PARTICULIER POUR CONDUIT DE GAZ DE FUMÉE REVÊTU

(30) Priority: 08.03.2016 CZ 201632172 U
(43) Date of publication of application: 16.01.2019
(73) Proprietor: ALMEVA EAST EUROPE a.s., 664 43 Zelesice (CZ)
(72) Inventor: ULRICH, Pavel, 623 00 Brno (CZ)
(74) Representative: Spacek, Jindrich
(86) International application number: PCT/CZ2017/000013
(87) International publication number: WO 2017/152888

(56) References cited:
- EP-A2- 1 724 509
- WO-A1-01/69118
- US-A1- 2008 092 975
- US-A1- 2009 026 761

## Description

### Field of the Invention

The invention relates to an angle pipe for lined flue gas conduits, exhibiting within its body an integrated reduction between the connecting flanges, wherein, as an important monobloc element in the system of the gas exhaust from the appliance, it is used particularly to simplify the procedure and reliability of the lining of the flue gas conduits, hence smokestack.

### Description of the Prior Art

When lining the flue gas conduits, the reduction problem of connection of larger diametrical dimension insert to smaller diameter is typically solved by connecting individual reduction pieces up to the required diameter of the tubular parts by successive coupling of individual tubular parts, for example in putting together previously separated items, e.g.: a straight portion followed by a reduced piece up to obtaining the specific reduced diameter and then the element with appropriately smaller diameter etc.

Often occur situations in which it is necessary to arrange the exhaust duct by altering vertical direction in horizontal one and also in modifying its cross-section in this part of the flue gas conduits with respect to the exhaust gas path system of the concerned appliance.

So far, such situations have been solved by successively connecting the tubular parts in series. For example, the straight vertical tubular portion will be connected to a tubular reduction of the pipe to which an angle pipe of smaller diameter is connected, thereby altering the position of the aforementioned connecting section of this portion of the flue gas conduit from vertical direction in horizontal one while reducing it into the smaller cross-section,

The disadvantage of this solution is obviously the elongation of the lined path of combustion gases, but also the safety of the seal. The more tubular elements are connected to one another, the more connections and a greater probability of defects in the tightness of the connections between one another are to be expected. The same is true for the need for precise preparation of the individual tubular elements of the ducted gas, especially when it is necessary to direct the gas flow components to certain zone in order not to interfere or due to the need for directing the flue gas conduits in a most economical manner or in an appropriate direction. It often happens that there is only a limited manoeuvring space when installing tubular flue gas conduit, whereas it would certainly be an advantage when using the most limited number of tubular parts of the flue gas conduit, of course not at the expense of quality. All the above disadvantages contribute to the high cost of the flue gas conduit of the installation and often cause complications due to the space occupied by conduits.

US 2009/026761 A1 discloses a pipe elbow for conditioning the flow of fluid through the elbow so that separate flow conditioners or a flow straightener need not be inserted between the elbow and a flow measurement device, comprising, a fluid carrying conduit elbow having first and second ends of circular cross section for connection to straight piping and having a bend intermediate the ends, wherein a lateral cross section of the conduit at the bend is elliptical in shape.

WO 01/69118 A1 discloses a pipe system with an inner pipe segment and an outer pipe segment. The inner pipe segment is fitted in the interior of the outer pipe segment and being fixed thereto. The inner pipe segment is provided with at least one substantially radially directed fixing lug with a free end, The outer pipe segment is provided with at least one guide groove for receiving and guiding the free end of the fixing lug, so that the mounting of the inner pipe segment in the outer pipe segment is facilitated.

EP 1 724 509 A2 discloses a variable angle pipe connector that comprises a first pipe part and a pair of second pipe parts which terminate in connecting sockets for coupling to respective pipes to be coupled by the variable angle pipe connector. The second pipe parts are rotatably coupled to the first pipe part for facilitating altering the angle at which the connecting sockets make with each other for adapting the variable angle pipe connector for coupling the pipes which may extend at different angles to each other within a range of angles from 0° to 90°.

US 2008/092975 A1 discloses a small bend radius connector for a heater core, wherein a first end of the connector has a rectangular cross section, a second end of the connector has a circular cross section, and wherein a size, a weight, and a cost of production of the connector are minimized.

### Nature of the Invention

In order to achieve these objectives and to overcome the existing disadvantages of lining the flue gas conduits by tubular parts, a new invention is presented, in particular for the critical zone of the angle pipe section, the principle of which consists of a monobloc compact element of the flue gas conduit to direct the exhaust gases from horizontal direction to vertical one or vice versa, the assembly being constituted by the threaded flange on one side and by one inserted flange neck on other side is interconnected by means of at least one intermediate reduction piece for passage of the angle pipe section in the lower part of the inserted flange neck with a larger cross-section.

The advantage of the invention is in particular that the flue gas system needs not to be unnecessarily prolonged, which will be reflected in the reduced need for a number of tubular parts. Also, in terms of safety, the intermediate reduced angle pipe is welded as a compact unit in the plant premises, so there is no connection between the angle pipe and another potentially necessary reduction and therefore the problems associated with the use of seals and possible seal failure are removed.

Another great advantage of the invention results from the situations when realizing assembly in confined spaces or generally in situations where space is limited for the handling of tubular parts in their interconnection and as well in cases where it is necessary to modify the gas flow from vertical direction to horizontal one and with possible modification of the dimension of the flue gas conduit.

For example, while lining the lined flue gas conduits, the angle pipe can be inserted through a flue gas shaft down until the flue, Then just simply screw in the straight vertical pipe section of smaller dimension. This eliminates the need of raccordement of a standard reduction piece without the risk of disconnection, faulty location of the seal, etc.

The entire technical solution of the reduced tubular angle pipe makes it possible to optimally direct the entire lined flue gas conduit in respecting the space and direction disposition as desired from the viewpoint of structural engineering or space technology requirements.

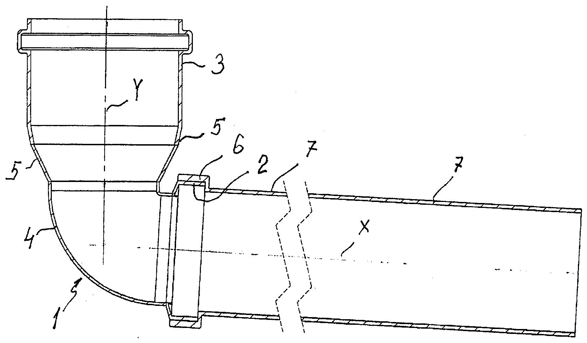

### Description of the Drawing

Other advantages and effects of the present invention can be seen from a single figure which shows a vertical sectional view of the complete embodiment of an angle pipe for the lined flue gas conduits.

### Examples of the Version of the Invention

The angle pipe for the lined flue gas conduit, which is not shown here, consists of a monobloc compact element 1 of the portion of the flue gas conduit for directing flue gas from horizontal direction along the X-axis to vertical direction along the Y-axis, or vice-versa, as appropriate.

The compact element **1** of the angle pipe is constituted by the assembly of following components - a threaded flange **2** on one side and an inserted flange neck 3 on the other side, which are interconnected by an angle pipe section **4** equipped with at least one intermediate reduction piece **5** in order to pass from the angle pipe section **4** into the bottom of the inserted flange neck **3** of larger cross-section.

The intermediate reduction piece **5** is formed by at least two casings in the form of truncated cones interconnected between the angle pipe section **4** and the inserted flange neck 3,

The threaded flange 2 is provided with an externally threaded connection for fixing the external connection flange **6** of the reduction connection tube 7.

The main axes X, Y of the parts of the angle pipe form an angle of at least 91° between them.

## Claims

1. An angle pipe for lined flue gas conduits consisting of a monobloc compact element (1) for the portion of the flue gas conduit for directing the flue gas from horizontal direction to vertical one or vice versa, and which is formed by an assembly consisting of an external threaded flange (2) on one side and an inserted flange neck (3) on other side and which are interconnected by an angle pipe section (4) equipped with at least one intermediate reduction piece (5) for passage of the angle pipe section (4) into the bottom part of the inserted flange neck (3) with a larger cross-section, wherein the external threaded flange (2) is provided with an externally threaded connection for the threaded attachment of threaded connection flange (6) of a reduction connection tube (7), **characterized in that** the intermediate reduction piece (5) is formed by at least two casings in the form of truncated cones interconnected between the angle pipe section (4) and the inserted flange neck (3).

2. The angle pipe for lined flue gas conduits according to claim 1, **characterized in that** the main axes X, Y of the parts of the angle pipe form an angle of at least 91°.

## Patentansprüche

1. Winkelrohr, insbesondere für ausgekleidete Abgasleitung, bestehend aus einem einteiligen kompakten Element (1) des Abschnitts der Abgasleitung zur Führung von Abgasen von horizontaler Richtung in die vertikale Richtung und umgekehrt, in Form eines äußeren Gewindeflansches (2) auf der einen Seite und einem Steckhals (3) auf der anderen Seite, miteinander verbunden mit einem Winkelabschnitt (4), ausgestattet mit mindestens einer Übergangsreduktion (5) für den Übergang zum Winkelabschnitt (4) nach unten in den Steckhals (3) mit größerem Querschnitt, wobei der äußere Gewindeflansch (2) mit einer äußeren Verschraubung zum Aufschrauben des Gewindeflansches (6) des Anschluss-Reduktionsrohres (7) ausgestattet ist, **gekennzeichnet dadurch, dass** die Übergangsreduktion (5) durch mindestens zwei Mäntel in Form von Kegelstümpfen gebildet ist, die zwischen dem Winkelabschnitt (4) und dem Steckhals (3) einander anschließen.

2. Winkelrohr, insbesondere für ausgekleidete Abgasleitung nach Anspruch 1, **gekennzeichnet dadurch, dass** die Hauptachsen X, Y mit dem Teil des Winkelrohres einen Winkel von mindestens 91° bilden.

## Revendications

1. Tuyau d'angle pour conduit de gaz de fumée revêtu composé d'un élément (1) compact monobloc d'une section de conduit de gaz de fumée revêtu pour conduire les fumées de la direction horizontale vers la direction verticale ou inversement sous forme d'un ensemble de bride (2) filetée externe d'une part et d'emboîtement (3) à enfiler d'autre part reliés entre eux au moyen d'une section (4) coudée pourvu d'au moins un raccord (5) réducteur pour raccorder la section (4) d'angle au bas de l'emboîtement (3) à enfiler ayant la section transversale plus grande, la bride (2) filetée externe étant pourvue d'un raccord à vis externe pour montage fileté d'une bride (6) filetée de recouvrement du tuyau (7) de raccordement réducteur **caractérisé en ce que** le raccord (5) réducteur est formé d'au moins deux enveloppes en forme de cônes tronqués s'enchaînant entre la section (4) coudée et l'emboîtement (3) à enfiler.

2. Tuyau d'angle pour conduit de gaz de fumée revêtu selon la revendication 1 **caractérisé en ce que** les axes principales X,Y des composants du tuyau d'angle forment entre eux un angle d'au moins 91°.
